# EUROPEAN PATENT APPLICATION

(11) **EP 4 553 441 A1**
(43) Date of publication of application: **14.05.2025**
(21) Application number: 24805408.2
(22) Date of filing: 30.08.2024
(51) Int. Cl.: F28F 9/02, B23K 1/00, F28D 1/053, F28F 9/16

(54) **HEAT EXCHANGER, AIR CONDITIONER, AND HEAT EXCHANGER MANUFACTURING METHOD**

(30) Priority: 29.09.2023 JP 2023170911
(71) Applicant: Daikin Industries, Ltd., Osaka-Shi, Osaka 530-0001 (JP)
(72) Inventor: YAMADA, Koju, Osaka-shi, Osaka 530-0001 (JP); TERAMOTO, Yoshihiro, Osaka-shi, Osaka 530-0001 (JP); NOMURA, Jumpei, Osaka-shi, Osaka 530-0001 (JP); HAMAO, Taketo, Osaka-shi, Osaka 530-0001 (JP)
(74) Representative: Hoffmann Eitle
(86) International application number: PCT/JP2024/031191
(87) International publication number: WO 2025/069924

(57) **Abstract**

Provided are a heat exchanger that can be easily brazed, an air conditioner, and a method of manufacturing the heat exchanger. An outdoor heat exchanger (11) includes a plurality of flat tubes (28), a gas header (50) to which the plurality of flat tubes (28) is connected, a gas refrigerant connecting pipe (19a) connected to the gas header (50), and a coupling portion (58) provided at a coupling part between the gas header (50) and the gas refrigerant connecting pipe (19a). The coupling portion (58) includes a metal and a brazing material.

## Description

### TECHNICAL FIELD

The present disclosure relates to a heat exchanger, an air conditioner, and a method of manufacturing the heat exchanger.

### BACKGROUND ART

Conventionally, a heat exchanger including a header to which a plurality of heat transfer tubes is connected has been used in an air conditioner and the like. Examples of a header of such a heat exchanger includes a header to which a refrigerant pipe for supplying a refrigerant is connected.

For example, in a heat exchanger of an air conditioner described in Patent Literature 1 (JP 2023-102026 A), the header and the refrigerant pipe are brazed and fixed to each other.

### SUMMARY OF THE INVENTION

### <Technical Problem>

As an operation of brazing between the header of the heat exchanger and the refrigerant pipe, for example, there is a method of brazing while supplying a brazing material to a joint portion between the header and the refrigerant pipe, but the operation of brazing tends to be complicated.

### <Solution to Problem>

A heat exchanger according to a first aspect includes a plurality of heat transfer tubes, a header, a refrigerant pipe, and a coupling portion. The header is connected to the plurality of heat transfer tubes. The refrigerant pipe is connected to the header. The coupling portion is provided at a coupling part between the header and the refrigerant pipe. The coupling portion is separate from the header. The coupling portion is separate from the refrigerant pipe. The coupling portion includes a metal and a brazing material.

In this heat exchanger, the brazing material included in the coupling portion is melted during brazing, and thus, the header and the refrigerant pipe can be easily joined.

A heat exchanger according to a second aspect is the heat exchanger according to the first aspect, in which the coupling portion regulates movement of the pipe coupling part in an extending direction. The pipe coupling part is a coupling part of the refrigerant pipe.

This heat exchanger prevents the refrigerant pipe from falling off during in-furnace brazing.

A heat exchanger according to a third aspect is the heat exchanger according to the first or second aspect, in which the refrigerant pipe is a circular pipe. The coupling portion regulates a rotation of the pipe coupling part in a case where the direction in which the pipe coupling part extends is an axis direction of the rotation. The pipe coupling part is a coupling part of the refrigerant pipe.

This heat exchanger prevents the refrigerant pipe from rotating about an axis during the in-furnace brazing.

A heat exchanger according to a fourth aspect is the heat exchanger according to any of the first to third aspects, in which the coupling portion includes a first coupling portion and a second coupling portion. The first coupling portion is fixed to the pipe coupling part. The second coupling portion is fixed to the header. The pipe coupling part is a coupling part of the refrigerant pipe. The second coupling portion regulates a movement of the first coupling portion.

In this heat exchanger, a movement of the refrigerant pipe with respect to the header during the in-furnace brazing can be regulated only by the two coupling portions.

A heat exchanger according to a fifth aspect is the heat exchanger according to the fourth aspect, in which the first coupling portion covers a periphery of the pipe coupling part as viewed from the direction in which the pipe coupling part extends.

In this heat exchanger, the brazing material is easily supplied to the periphery of the pipe coupling part during the in-furnace brazing.

A heat exchanger according to a sixth aspect is the heat exchanger according to the fourth or fifth aspect, in which the first coupling portion has a first shape portion partially provided in a peripheral direction of the pipe coupling part. The refrigerant pipe is a circular pipe. The second coupling portion has a second shape portion. The second shape portion regulates the rotation of the pipe coupling part in association with the first shape portion in a case where the direction in which the pipe coupling part extends is the axis direction of the rotation.

This heat exchanger prevents the refrigerant pipe from rotating about the axis during the in-furnace brazing by the two coupling portions.

A heat exchanger according to a seventh aspect is the heat exchanger according to the sixth aspect, in which the first coupling portion includes a tubular member that covers the pipe coupling part from the periphery. The first shape portion is an opening or a notch provided in the tubular member. The second shape portion is inserted into the opening or the notch in a radial direction of the pipe coupling part.

In this heat exchanger, the second shape portion of the second coupling portion fixed to the header is inserted into the opening or the notch of the first coupling portion that is a tubular member fixed to the refrigerant pipe, and thus, the rotation of the refrigerant pipe is suppressed.

A heat exchanger according to an eighth aspect is the heat exchanger according to the fourth or fifth aspect, in which the second coupling portion is fixed to the first coupling portion, fixed to the pipe coupling part via the first coupling portion, or integrated with the first coupling portion.

In this heat exchanger, the movement of the refrigerant pipe with respect to the header during the in-furnace brazing can be regulated.

A heat exchanger according to a ninth aspect is the heat exchanger according to any of the first to eighth aspects, in which the header includes a first header member. The first header member includes a coupling part of the header. The first header member has a semicircular portion having a semicircular shape as viewed in a longitudinal direction of the first header member.

In this heat exchanger, since the first header member has a semicircular shape as viewed in the longitudinal direction, it is easy to increase a pressure resistance strength of the header.

A heat exchanger according to a tenth aspect is the heat exchanger according to any of the first to ninth aspects, in which the refrigerant pipe and the header do not include a brazing material.

In this heat exchanger, even when the refrigerant pipe and the header do not include a brazing material, the in-furnace brazing be performed by a brazing material included in the coupling portion provided at a coupling part between the header and the refrigerant pipe.

An air conditioner according to an eleventh aspect includes the heat exchanger according to any of the first to tenth aspects.

This air conditioner is easily manufactured by using the heat exchanger in which a header and a refrigerant pipe are brazed in a furnace.

A method of manufacturing a heat exchanger according to a twelfth aspect is a method of manufacturing a heat exchanger including a plurality of heat transfer tubes, a header to which the plurality of heat transfer tubes is connected, and a refrigerant pipe connected to the header, the method including a positioning step and a brazing step. In the positioning step, a coupling portion including a metal and a brazing material is provided at a coupling part between the header and the refrigerant pipe, and a position of the refrigerant pipe with respect to the header is determined via the coupling portion. In the brazing step, the refrigerant pipe is brazed to the header in the state of being positioned in the positioning step.

In the method of manufacturing the heat exchanger, the brazing material included in the coupling portion can be melted by brazing the refrigerant pipe in a state where the position of the refrigerant pipe with respect to the header is determined by the coupling portion. It is therefore possible to easily join the header and the refrigerant pipe while maintaining the position of the refrigerant pipe with respect to the header.

A method of manufacturing a heat exchanger according to a thirteenth aspect is the method of manufacturing a heat exchanger according to the twelfth aspect, in which the refrigerant pipe is a circular pipe. In the positioning step, a regulation state is set in which a rotation of the pipe coupling part is regulated by using the coupling portion. The rotation of the pipe coupling part is a rotation in a case where a direction in which the pipe coupling part extends is an axis direction of the rotation. The pipe coupling part is a coupling part of the refrigerant pipe with the header. In the brazing step, the refrigerant pipe is brazed to the header in the regulation state.

In the method of manufacturing the heat exchanger, the refrigerant pipe is prevented from rotating with respect to the header during brazing.

A method of manufacturing a heat exchanger according to a fourteenth aspect is the method of manufacturing a heat exchanger according to the twelfth or thirteenth aspect, in which the brazing step is performed in a furnace.

This method of manufacturing the heat exchanger enables in-furnace brazing to be performed while maintaining the position of the refrigerant pipe with respect to the header.

### BRIEF DESCRIPTION OF THE DRAWINGS

FIG. 1 is a schematic configuration diagram of an air conditioner.
FIG. 2 is a schematic perspective view of an outdoor heat exchanger.
FIG. 3 is a partial enlarged view of a heat exchange portion of the outdoor heat exchanger.
FIG. 4 is a schematic diagram showing an attachment state of heat transfer fins to flat tubes in the heat exchange portion.
FIG. 5 is an explanatory diagram showing how a refrigerant flows in the outdoor heat exchanger functioning as an evaporator of a refrigerant.
FIG. 6 is an external perspective view showing how a gas refrigerant connecting pipe is connected to a gas header.
FIG. 7 is a schematic exploded perspective view of the gas header.
FIG. 8 is an external perspective view of a coupling part between the gas header and the gas refrigerant connecting pipe.
FIG. 9 is an exploded perspective view of a vicinity of the coupling part between the gas header and the gas refrigerant connecting pipe.
FIG. 10 is an external perspective view showing how a first coupling portion is fixed to the gas refrigerant connecting pipe.
FIG. 11 is an external perspective view of a coupling part between a gas header and a gas refrigerant connecting pipe according to another embodiment A.
FIG. 12 is an external view of the coupling part between the gas header and the gas refrigerant connecting pipe according to another embodiment A.
FIG. 13 is an external perspective view of the coupling part of the gas refrigerant connecting pipe according to another embodiment A.
FIG. 14 is an external perspective view of a coupling part between a gas header and a gas refrigerant connecting pipe according to another embodiment B.
FIG. 15 is an external perspective view of the coupling part between the gas header and the gas refrigerant connecting pipe according to another embodiment B.
FIG. 16 is an external perspective view of a coupling part between a gas header and a gas refrigerant connecting pipe according to another embodiment F.
FIG. 17 is an external view of the coupling part between the gas header and the gas refrigerant connecting pipe according to another embodiment F.
FIG. 18 is an external view of a coupling part between a gas header and a gas refrigerant connecting pipe according to another embodiment G.

### DESCRIPTION OF EMBODIMENTS

Description will be made hereinafter to an embodiment of a heat exchanger of the present disclosure and an air conditioner that employs the heat exchanger.

### (1) Configuration of air conditioner

An air conditioner 1 will be described with reference to the drawings.

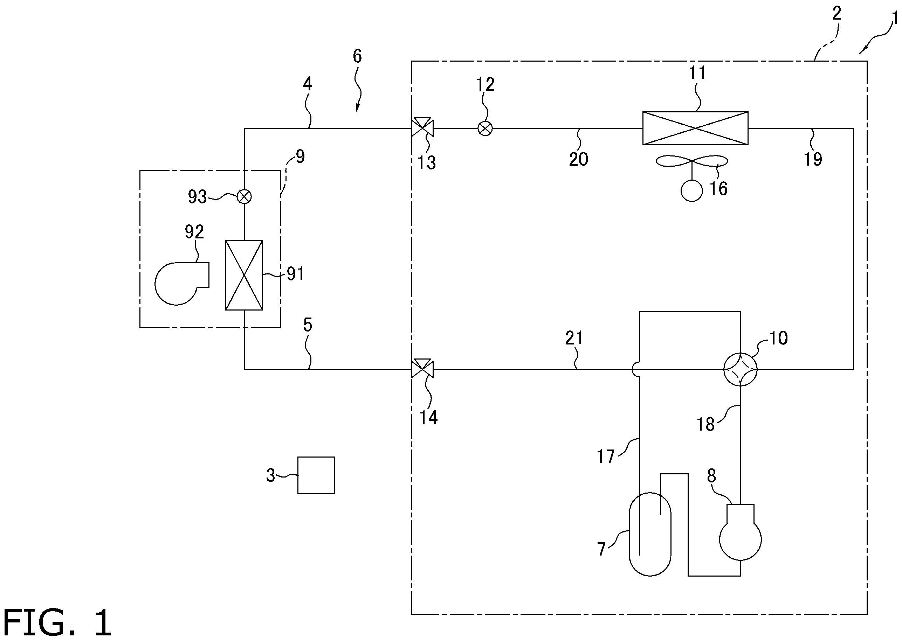

FIG. 1 is a schematic configuration diagram of the air conditioner 1 including a heat exchanger according to an embodiment of the present disclosure as an outdoor heat exchanger 11.

The air conditioner 1 is an apparatus to cool and heat an air conditioning target space by performing a vapor compression refrigeration cycle. Examples of the air conditioning target space include spaces in buildings such as office buildings, commercial facilities, and residences. The air conditioner merely exemplifies a refrigerant cycle apparatus. The heat exchanger of the present disclosure may be used for a different refrigerant cycle apparatus such as a refrigerator, a freezer, a hot water supplier, or a floor heater.

As shown in FIG. 1, the air conditioner 1 mainly includes an outdoor unit 2, an indoor unit 9, a liquid-refrigerant connection pipe 4, a gas-refrigerant connection pipe 5, and a control unit 3 that controls devices constituting the outdoor unit 2 and the indoor unit 9. The liquid-refrigerant connection pipe 4 and the gas-refrigerant connection pipe 5 are refrigerant connection pipes connecting the outdoor unit 2 and the indoor unit 9. The outdoor unit 2 and the indoor unit 9 are connected via the liquid-refrigerant connection pipe 4 and the gas-refrigerant connection pipe 5 to constitute a refrigerant circuit 6 in the air conditioner 1.

The air conditioner 1 shown in FIG. 1 includes one indoor unit 9. The air conditioner 1 may alternatively include a plurality of indoor units 9 connected parallelly to the outdoor unit 2 by the liquid-refrigerant connection pipe 4 and the gas-refrigerant connection pipe 5. The air conditioner 1 may alternatively include a plurality of outdoor units 2. The air conditioner 1 may be alternatively of an integral type including the outdoor unit 2 and the indoor unit 9 that are formed integrally with each other.

### (1-1) Outdoor unit

The outdoor unit 2 is installed outside the air conditioning target space, for example, on the roof of a building, near a wall surface of a building, and the like.

The outdoor unit 2 mainly includes an accumulator 7, a compressor 8, a four-way switching valve 10, the outdoor heat exchanger 11, an outdoor expansion valve 12, a liquid-side shutoff valve 13, a gas-side shutoff valve 14, and an outdoor fan 16.

The outdoor unit 2 mainly includes a suction pipe 17, a discharge pipe 18, a first gas refrigerant pipe 19, a liquid refrigerant pipe 20, and a second gas refrigerant pipe 21 as refrigerant pipes connecting various devices constituting the refrigerant circuit 6. The suction pipe 17 connects the four-way switching valve 10 and a suction side of the compressor 8. The suction pipe 17 is provided with the accumulator 7. The discharge pipe 18 connects a discharge side of the compressor 8 and the four-way switching valve 10. The first gas refrigerant pipe 19 connects the four-way switching valve 10 and a gas side of the outdoor heat exchanger 11. The liquid refrigerant pipe 20 connects a liquid side of the outdoor heat exchanger 11 and the liquid-side shutoff valve 13. The liquid refrigerant pipe 20 is provided with the outdoor expansion valve 12. The second gas refrigerant pipe 21 connects the four-way switching valve 10 and the gas-side shutoff valve 14.

The compressor 8 is a device that sucks a low-pressure refrigerant in the refrigeration cycle from the suction pipe 17, compresses the refrigerant with a compression mechanism (not shown), and discharges the compressed refrigerant to the discharge pipe 18.

The four-way switching valve 10 is a mechanism that switches a refrigerant flow direction to change a state of the refrigerant circuit 6 between a state of a cooling operation and a state of a heating operation. While the refrigerant circuit 6 is in the state of the cooling operation, the outdoor heat exchanger 11 functions as a radiator or a condenser of the refrigerant and an indoor heat exchanger 91 functions as a refrigerant evaporator. While the refrigerant circuit 6 is in the state of the heating operation, the outdoor heat exchanger 11 functions as an evaporator of the refrigerant and the indoor heat exchanger 91 functions as a condenser of the refrigerant. When the four-way switching valve 10 brings the state of the refrigerant circuit 6 into the cooling operation state, the four-way switching valve 10 causes the suction pipe 17 to communicate with the second gas refrigerant pipe 21 and causes the discharge pipe 18 to communicate with the first gas refrigerant pipe 19 (see solid lines in the four-way switching valve 10 in FIG. 1). When the four-way switching valve 10 brings the state of the refrigerant circuit 6 into the state of the heating operation, the four-way switching valve 10 causes the suction pipe 17 to communicate with the first gas refrigerant pipe 19 and causes the discharge pipe 18 to communicate with the second gas refrigerant pipe 21 (see broken lines in the four-way switching valve 10 in FIG. 1).

The outdoor heat exchanger 11 is a device that causes heat exchange between a refrigerant flowing inside and air at an installation site of the outdoor unit 2. The outdoor heat exchanger 11 will be described in detail later.

The outdoor expansion valve 12 is disposed between the outdoor heat exchanger 11 and the indoor heat exchanger 91 in the refrigerant circuit 6. In the present embodiment, the outdoor expansion valve 12 is disposed in the liquid refrigerant pipe 20 between the outdoor heat exchanger 11 and the liquid-side shutoff valve 13. The outdoor expansion valve 12 includes a mechanism that adjusts a pressure and a flow rate of the refrigerant flowing through the liquid refrigerant pipe 20.

The accumulator 7 is a container having a gas-liquid separation function of separating an influent refrigerant into a gas refrigerant and a liquid refrigerant. The accumulator 7 is also a vessel having a function of reserving an excessive refrigerant generated due to operation load change or the like.

The liquid-side shutoff valve 13 is provided at a connecting portion between the liquid refrigerant pipe 20 and the liquid-refrigerant connection pipe 4. The gas-side shutoff valve 14 is provided at a connecting portion between the second gas refrigerant pipe 21 and the gas-refrigerant connection pipe 5. The liquid-side shutoff valve 13 and the gas-side shutoff valve 14 are opened while the air conditioner 1 is in operation.

The outdoor fan 16 is fan for sucking outside heat source air into a casing (not shown) of the outdoor unit 2 and supplying the outdoor heat exchanger 11 with the heat source air, and discharging air having exchanged heat with the refrigerant in the outdoor heat exchanger 11 to the outside of the casing of the outdoor unit 2. Examples of the outdoor fan 16 include a propeller fan.

### (1-2) Indoor unit

The indoor unit 9 is a unit installed in the air conditioning target space. The indoor unit 9 is, for example, of a ceiling embedded type. Alternatively, the indoor unit may be of a ceiling pendant type, a wall mounted type, or a floor-standing type. The indoor unit 9 may be alternatively disposed outside the air conditioning target space. For example, the indoor unit 9 may be installed in an attic space, a machine chamber, or a garage. In this case, there is disposed an air passage for supplying air having exchanged heat with a refrigerant in the indoor heat exchanger 91 from the indoor unit 9 to the air conditioning target space. Examples of the air passage include a duct.

The indoor unit 9 mainly includes the indoor heat exchanger 91, an indoor expansion valve 93, and an indoor fan 92.

The indoor heat exchanger 91 causes heat exchange between the refrigerant flowing in the indoor heat exchanger 91 and air in the air conditioning target space. The indoor heat exchanger 91 is, for example, a fin-and-tube heat exchanger including a plurality of heat transfer tubes and a plurality of fins (not shown). One end of the indoor heat exchanger 91 is connected to the indoor expansion valve 93 via a refrigerant pipe. The end of the indoor heat exchanger 91 is connected to the gas-refrigerant connection pipe 5 via a refrigerant pipe.

The indoor expansion valve 93 is disposed between the indoor heat exchanger 91 and the liquid-refrigerant connection pipe 4 in the refrigerant circuit 6. The indoor expansion valve 93 has a mechanism that adjusts the pressure and the flow rate of the refrigerant passing through the indoor expansion valve 93.

The indoor fan 92 is a mechanism that sucks air in the air conditioning target space into a casing (not shown) of the indoor unit 9, supplies the indoor heat exchanger 91 with the air, and blows the air having exchanged heat with the refrigerant in the indoor heat exchanger 91 to the air conditioning target space. Examples of the indoor fan 92 include a turbo fan.

### (1-3) Control unit

The control unit 3 is a functional unit that controls operation of various devices constituting the air conditioner 1.

The control unit 3 is constituted such that an outdoor control unit (not shown) of the outdoor unit 2 and an indoor control unit (not shown) of the indoor unit 9 are communicably connected via a transmission line (not shown). Each of the outdoor control unit and the indoor control unit includes, for example, a microcomputer, and a memory or the like storing various programs for control of the air conditioner 1 and executed by the microcomputer. FIG. 1 shows, for convenience, the control unit 3 distant from the outdoor unit 2 and the indoor unit 9.

The control unit 3 is electrically connected to various devices of the outdoor unit 2 and the indoor unit 9, including the compressor 8, the four-way switching valve 10, the outdoor expansion valve 12, the outdoor fan 16, the indoor fan 92, and the indoor expansion valve 93. The control unit 3 is also electrically connected to various sensors (not shown) provided in the outdoor unit 2 and the indoor unit 9. The control unit 3 is configured to be communicable with a remote controller (not shown) that is operated by a user of the air conditioner 1.

The control unit 3 operates and stops the air conditioner 1, and controls operation of the various devices constituting the air conditioner 1, in accordance with measurement signals from the various sensors, a command received from the remote controller (not shown), and the like.

### (2) Configuration of outdoor heat exchanger

A configuration of the outdoor heat exchanger 11 will be described with reference to the drawings.

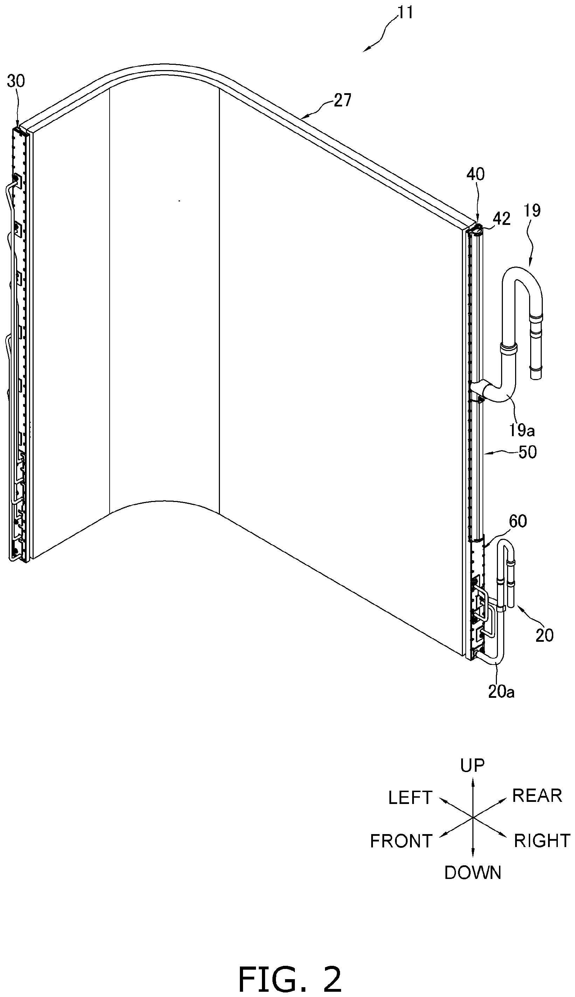

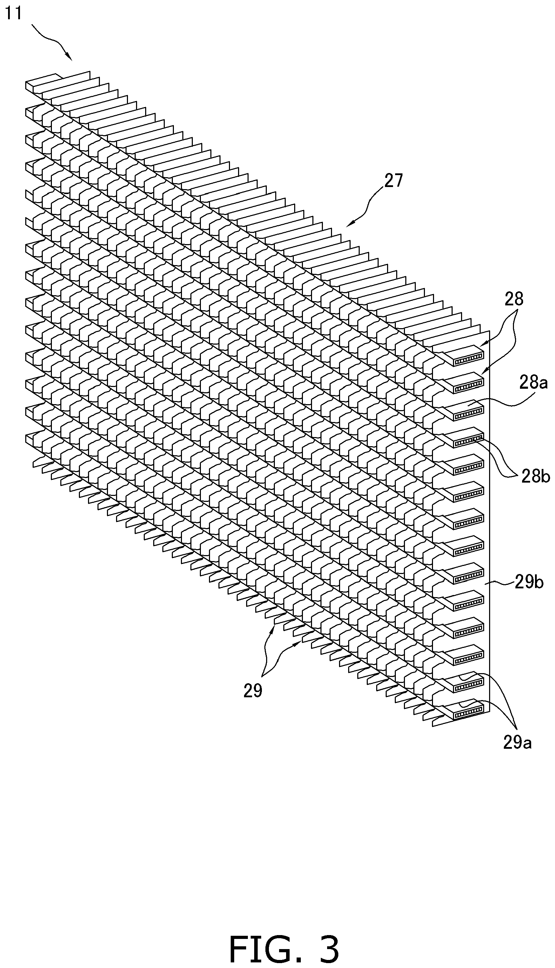

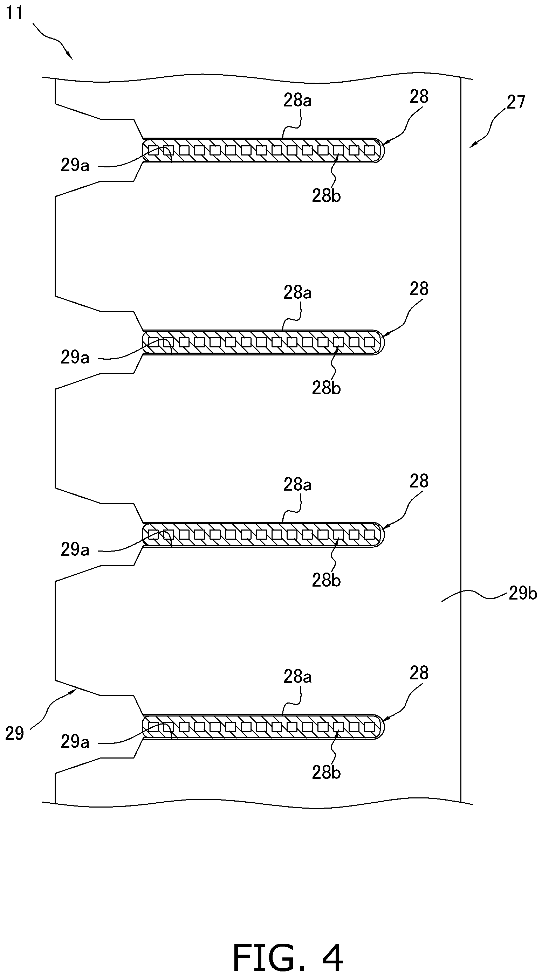

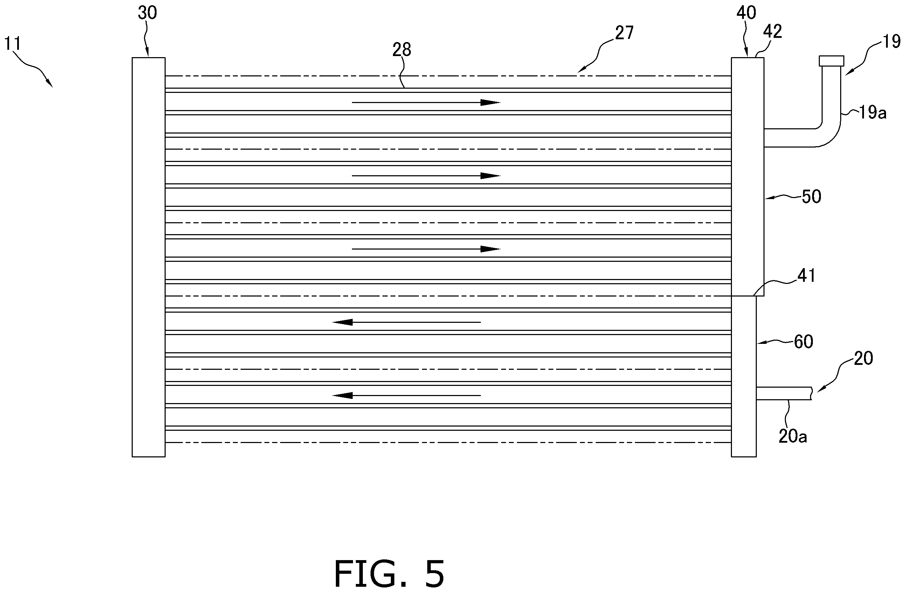

FIG. 2 is a schematic perspective view of the outdoor heat exchanger 11. FIG. 3 is a partial enlarged view of a heat exchange portion 27 to be described later in the outdoor heat exchanger 11. FIG. 4 is a schematic diagram showing attachment states of fins 29 to be described later to flat tubes 28 in the heat exchange portion 27. FIG. 5 is a schematic configuration diagram of the outdoor heat exchanger 11. FIG. 5 includes arrows in the heat exchange portion 27, indicating refrigerant flows during the heating operation (when the outdoor heat exchanger 11 functions as an evaporator).

The following description may include expressions such as "up", "down", "left", "right", "front (before)", and "rear (behind)", for indication of directions and positions. These expressions follow directions of arrows included in FIG. 2, unless otherwise specified. These expressions describing the directions and the positions are adopted for convenience of description. Unless otherwise specified, such expressions will not limit directions and positions of the entire outdoor heat exchanger 11 and various constituents of the outdoor heat exchanger 11 to the directions and the positions being described.

The outdoor heat exchanger 11 is a device that causes heat exchange between the refrigerant flowing inside and the air.

The outdoor heat exchanger 11 mainly includes a plurality of flat tubes 28, a plurality of fins 29, a turnaround header 30, and an inlet-outlet header 40. In the present embodiment, all of the flat tubes 28, the fins 29, the turnaround header 30, and the inlet-outlet header 40 include aluminum or aluminum alloy.

The flat tubes 28 and the fins 29 fixed to the flat tubes 28 constitute the heat exchange portion 27. When air flows in air ducts constituted by the flat tubes 28 and the fins 29 of the heat exchange portion 27, the outdoor heat exchanger 11 causes heat exchange between the refrigerant flowing in the flat tubes 28 and the air flowing in the air ducts.

### (2-1) Flat pipe

As shown in FIG. 3, the flat tubes 28 are flat heat transfer tubes each having upper and lower flat surfaces 28a functioning as heat transfer surfaces. As in FIG. 3, each of the flat tubes 28 is provided with a plurality of refrigerant passages 28b allowing the refrigerant to flow. Examples of the flat tubes 28 include a flat porous tube provided with a large number of refrigerant passages 28b each having a small sectional area of a passage allowing the refrigerant to flow. The plurality of refrigerant passages 28b according to the present embodiment are aligned in an air flow direction.

As shown in FIG. 5, the outdoor heat exchanger 11 includes the flat tubes 28 that extend horizontally between the turnaround header 30 and the inlet-outlet header 40 and are aligned in an up-down direction to form a plurality of columns. In the present embodiment, each of the flat tubes 28 extending between the turnaround header 30 and the inlet-outlet header 40 is bent at one point, such that the heat exchange portion 27 constituted by the flat tubes 28 has a substantially L shape in plan view. In the present embodiment, the plurality of flat tubes 28 is disposed to be constantly spaced apart in the up-down direction.

### (2-2) Fin

The plurality of fins 29 is a member for increasing a heat transfer area of the outdoor heat exchanger 11. The fins 29 are plate-shaped members extending along the columns of the flat tubes 28. The outdoor heat exchanger 11 is used in a state where the plurality of flat tubes 28 extending horizontally is aligned in the up-down direction. The fins 29 extend in the up-down direction in a state where the outdoor heat exchanger 11 is installed in the outdoor unit 2.

The fins 29 are provided with a plurality of cut-away parts 29a extending in a direction of inserting the flat tubes 28 as shown in FIG. 4 so as to receive the plurality of flat tubes 28. The cut-away parts 29a extend in an extending direction of the fins 29 and in a direction perpendicular to a thickness direction of the fins 29. The cut-away parts 29a provided in the fins 29 extend horizontally in a state where the outdoor heat exchanger 11 is installed in the outdoor unit 2. The cut-away parts 29a are provided in the fins 29 so as to be spaced apart correspondingly to spaces of the aligned flat tubes 28. In the outdoor heat exchanger 11, the plurality of fins 29 is aligned in an extending direction of the flat tubes 28. When the flat tubes 28 are inserted correspondingly to the plurality of 29a of the plurality of fins 29, spaces between the flat tubes 28 adjacent to each other are divided into a plurality of air ducts allowing air to flow.

The fins 29 have communication portions 29b communicated in the up-down direction upstream or downstream of the flat tubes 28 in the air flow direction. The communication portions 29b of the fins 29 are located upstream of the flat tubes 28 in the present embodiment.

### (2-3) Inlet-outlet header

The inlet-outlet header 40 includes a gas header 50 located in an upper portion and a liquid header 60 positioned in a lower portion. The gas header 50 and the liquid header 60 are partitioned in the up-down direction by a partition plate 41. The gas header 50 has a space inside, and the liquid header 60 has a space separated from the space inside the gas header 50 by the partition plate 41. An upper end of the gas header 50 is closed by an upper lid 42. The partition plate 41 also functions as a bottom plate of the gas header 50.

A gas refrigerant connecting pipe 19a constituting one end of the first gas refrigerant pipe 19 is connected to the gas header 50. The gas refrigerant connecting pipe 19a may include an alloy such as an aluminum alloy that does not have a clad layer including a brazing material.

A liquid refrigerant connecting pipe 20a constituting one end of the liquid refrigerant pipe 20 is connected to the liquid header 60.

As shown in FIG. 5, an end on one side of each flat tube 28 is connected to the turnaround header 30, and an end on the other side of each flat tube 28 is connected to the gas header 50 and the liquid header 60 of the inlet-outlet header 40. The outdoor heat exchanger 11 is disposed in the casing (not illustrated) of the outdoor unit 2 such that a longitudinal direction of each of the turnaround header 30 and the inlet-outlet header 40 approximately matches a vertical direction.

### (2-4) Turnaround header

An end of each flat tube 28 different from an end of each flat tube 28 connected to the gas header 50 and the liquid header 60 of the inlet-outlet header 40 is connected to the turn-back header 30.

### (3) Refrigerant flow in outdoor heat exchanger

When the outdoor heat exchanger 11 functions as an evaporator of the refrigerant by the air conditioner 1 performing the heating operation, the refrigerant in a liquid state or a gas-liquid two-phase state that has reached the liquid header 60 from the liquid refrigerant pipe 20 is divided in an internal space of the liquid header 60 and then flows through each flat tube 28 connected to the liquid header 60. The refrigerant flowing through each flat tube 28 exchanges heat with air to be partially evaporated, and reaches a lower region of an internal space of the turnaround header 30. The refrigerant sent to the lower region of the internal space of the turnaround header 30 is sent to an upper region of the internal space of the turnaround header 30. The refrigerant that has reached the upper region of the turnaround header 30 flows through each flat tube 28 connected to the upper region of the turnaround header 30. The refrigerant flowing through each flat tube 28 further evaporates by heat exchange with the air again, and reaches the gas header 50. The refrigerant that has reached the gas header 50 flows through the first gas refrigerant pipe 19 after merging.

When the air conditioner 1 performs the cooling operation or a defrost operation, the refrigerant flows in the refrigerant circuit 6 in an opposite direction to a direction during the heating operation. Specifically, the refrigerant discharged from the compressor 8 flows into the gas header 50 after flowing through the first gas refrigerant pipe 19. The refrigerant in a gas state that has reached the gas header 50 is divided in the internal space of the gas header 50, and then flows through each flat tube 28 connected to the gas header 50. The refrigerant flowing through each flat tube 28 radiates heat or condenses by exchanging heat with air, and reaches the upper region of the internal space of the turnaround header 30. The refrigerant sent to the upper region of the internal space of the turnaround header 30 descends through the internal space of the turnaround header 30 and reaches the lower region of the internal space of the turnaround header 30. The refrigerant that has reached the lower region of the turnaround header 30 flows through each flat tube 28 connected to the lower region of the turnaround header 30. The refrigerant flowing through each flat tube 28 further radiates heat and condenses by heat exchange with the air again, and reaches the liquid header 60. The refrigerant that has reached the liquid header 60 flows through the liquid refrigerant pipe 20 after merging.

### (4) Details of gas header

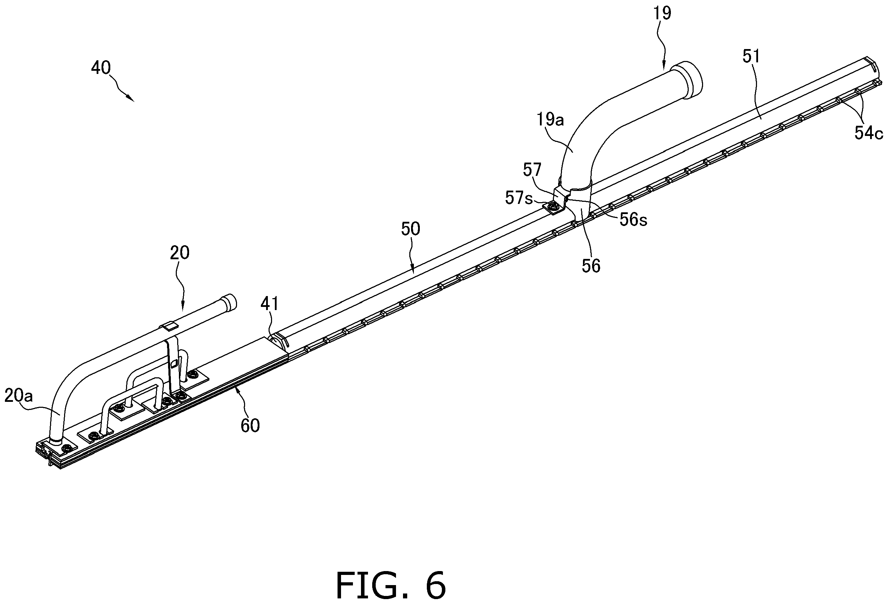

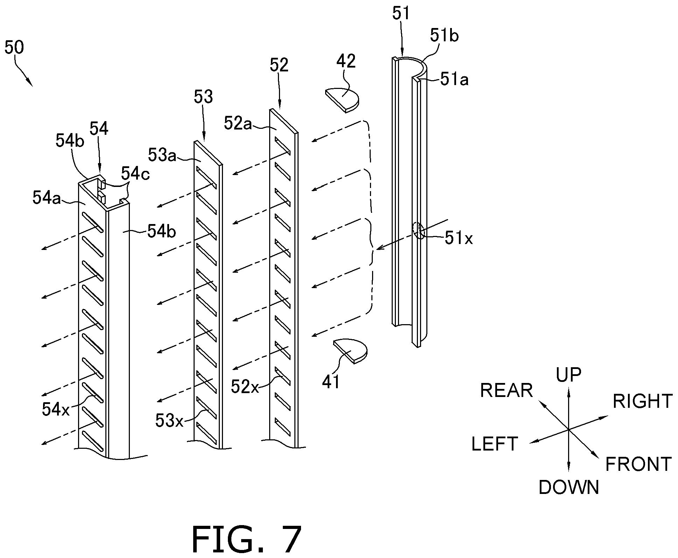

FIG. 6 is an external perspective view of the gas header 50. FIG. 7 is an exploded perspective view of the gas header 50.

The gas header 50 includes a first header member 51, a second header member 52, a third header member 53, and a fourth header member 54. The gas header 50 is constituted such that the first header member 51, the second header member 52, the third header member 53, and the fourth header member 54 are joined to each other by brazing.

### (4-1) First header member

The first header member 51 is a member stacked so as to be joined to a right side surface of the second header member 52. A length of the first header member 51 in a front-rear direction is similar to a length of the second header member 52 and the third header member 53 in the front-rear direction, and is similar to a length of a portion of a flat tube connecting plate 54a of the fourth header member 54 in the front-rear direction excluding both side surfaces 54b.

The first header member 51 is a member including metal such as aluminum alloy that does not have a clad layer including brazing material.

The first header member 51 includes a first plate-shaped portion 51a and a semicircular portion 51b.

The first plate-shaped portion 51a is a plate-shaped portion expanding in the up-down direction and the front-rear direction on each of a front side and a rear side of the semicircular portion 51b.

The semicircular portion 51b is provided so as to link a front portion of the first plate-shaped portion 51a and a rear portion of the first plate-shaped portion 51a, and is a semicircular arc portion configured by a half of an arc whose axial direction is a longitudinal direction of the gas header 50. The semicircular portion 51b bulges toward a side opposite to the second header member 52 from the first plate-shaped portion 51a. The semicircular portion 51b is provided with a connecting opening 51x connected to the gas refrigerant connecting pipe 19a of the first gas refrigerant pipe 19. The connecting opening 51x is an opening penetrating the semicircular portion 51b in a plate thickness direction.

In the first header member 51, the front portion of the first plate-shaped portion 51a and the rear portion of the first plate-shaped portion 51a are in contact with a claw 54c of the fourth header member 54 to be described later, and are caulked from the right side by the claw 54c of the fourth header member 54.

The partition plate 41 and the upper lid 42 are provided between the first header member 51 and the second header member 52, and function as a lower lid and an upper lid for forming the internal space of the gas header 50.

### (4-2) Second header member

The second header member 52 is a member stacked so as to be in contact with a right side surface of the third header member 53 and to be in contact with a left side surface of the first plate-shaped portion 51a of the first header member 51. The length of the second header member 52 in the front-rear direction is similar to the length of the third header member 53 in the front-rear direction. The second header member 52 preferably has a surface on which a clad layer including a brazing material is formed. However, the configuration of the second header member 52 is not limited to this example.

The second header member 52 includes a second plate-shaped portion 52a and a plurality of openings 52x.

The second plate-shaped portion 52a has a flat plate shape expanding in the up-down direction and the front-rear direction.

The plurality of openings 52x are openings aligned in the up-down direction and penetrating through the second plate-shaped portion 52a in a plate thickness direction.

Front and rear edges of each opening 52x are located on an inner side of an opening 53x of the third header member 53 and on an inner side of a flat tube connecting opening 54x formed in the flat tube connecting plate 54a of the fourth header member 54 as viewed in a plate thickness direction of the second header member 52. A width in the front-rear direction of the plurality of openings 52x of the second header member 52 is narrower than a width in the front-rear direction of the flat tube 28. Upper and lower edges of the plurality of openings 52x of the second header member 52 are openings located on an outer side of each flat tube connecting opening 54x formed in the flat tube connecting plate 54a of the fourth header member 54 as viewed in the plate thickness direction of the second header member 52.

With this configuration, in inserting the flat tubes 28 into the gas header 50, the vicinities of front and rear sides of a distal end of each flat tube 28 come into contact with the edge of the corresponding openings 52x in the second header member 52. This configuration therefore determines the degree of insertion of each flat tube 28 in the gas header 50.

In the present embodiment, the second header member 52 also functions as a member constituting the inside of the liquid header 60.

### (4-3) Third header member

The third header member 53 is a member stacked so as to be in contact with a right side surface of the flat tube connecting plate 54a of the fourth header member 54 and to be in contact with a left side surface of the second header member 52. The length of the third header member 53 in the front-rear direction is similar to the length of the portion of the flat tube connecting plate 54a of the fourth header member 54 in the front-rear direction excluding the both side surfaces 54b. The third header member 53 preferably has a surface on which a clad layer including a brazing material is formed. However, the configuration of the third header member 53 is not limited to this example.

The third header member 53 includes a third plate-shaped portion 53a and a plurality of openings 53x.

The third plate-shaped portion 53a has a flat plate shape expanding in the up-down direction and the front-rear direction.

The plurality of openings 53x are openings aligned in the up-down direction and penetrating through the third plate-shaped portion 53a in a plate thickness direction.

The opening 53x of the third header member 53 are larger than the flat tube connecting openings 54x provided in the flat tube connecting plate 54a of the fourth header member 54. In a state where the third header member 53 is stacked on the flat tube connecting plate 54a of the fourth header member 54, an outer edge of each opening 53x of the third header member 53 is configured to be located on an outer side of an outer edge of each flat tube connecting opening 54x formed in the flat tube connecting plate 54a of the fourth header member 54 as viewed in a plate thickness direction of the third header member 53. This configuration can provide an escape space for the brazing material melted at the time of joining by brazing, and thus can prevent the melted brazing material from moving due to a capillary phenomenon and blocking the refrigerant passages 28b of the flat tubes 28.

In the present embodiment, the third header member 53 also functions as a member constituting the inside of the liquid header 60.

### (4-4) Fourth header member

The fourth header member 54 mainly constitutes a periphery of an outline of the gas header 50 with the first header member 51. The fourth header member 54 may alternatively have on a surface on which a clad layer including a brazing material is formed.

The fourth header member 54 includes the flat tube connecting plate 54a, the side surface 54b, and the claw 54c.

The fourth header member 54 according to the present embodiment is formed as follows. That is, a sheet metal obtained by rolling is bent in the longitudinal direction of the gas header 50. However, the method of forming the header member 54 is not limited to this method.

The flat tube connecting plate 54a is a flat plate portion expanding in the up-down direction and in the front-rear direction. The flat tube connecting plate 54a has the plurality of flat tube connecting openings 54x aligned in the up-down direction. Each flat tube connecting opening 54x is an opening penetrating the flat tube connecting plate 54a in a thickness direction. In a state where the flat tube 28 is inserted to the flat tube connecting openings 54x such that one end of the flat tube 28 completely passes therethrough, the flat tube 28 is joined by brazing. In such a state where each flat tube 28 is joined by brazing, an entire inner peripheral surface of each of the flat tube connecting openings 54x is in contact with an entire outer peripheral surface of a corresponding one of the flat tubes 28. Each opening 53x of the third header member 53 is larger than the flat tube 28, and when an operation of inserting the flat tube 28 into the flat tube connecting opening 54x is performed, friction does not occur between the flat tube 28 and each opening 53x of the third header member 53, and thus, the insertion operation is facilitated.

The side surface 54b extends rightward on a front side of the flat tube connecting plate 54a, and has a surface expanding in the up-down direction and a surface extending rightward on a rear side of the flat tube connecting plate 54a and expanding in the up-down direction.

The claw 54c has a portion extending rearward from a right side end of the front side surface 54b and a portion extending forward from a right side end of the rear side surface 54b.

In a state before the third header member 53, the second header member 52, and the first plate-shaped portion 51a of the first header member 51 are disposed on an inner side of the fourth header member 54 in plan view, the claw 54c extends on the extension of the side surface 54b. By bending the claw 54c in a state where the third header member 53, the second header member 52, and the first plate-shaped portion 51a of the first header member 51 are disposed on the inner side of the fourth header member 54, the third header member 53, the second header member 52, and the first header member 51 are caulked by the fourth header member 54. Brazing is executed in a furnace in this state to join the members by brazing for complete fixation.

In the present embodiment, the fourth header member 54 also functions as a member constituting an outer periphery of the liquid header 60.

### (5) Coupling between gas header and gas refrigerant connecting pipe

Hereinafter, coupling between the gas header 50 and the gas refrigerant connecting pipe 19a by in-furnace brazing will be described.

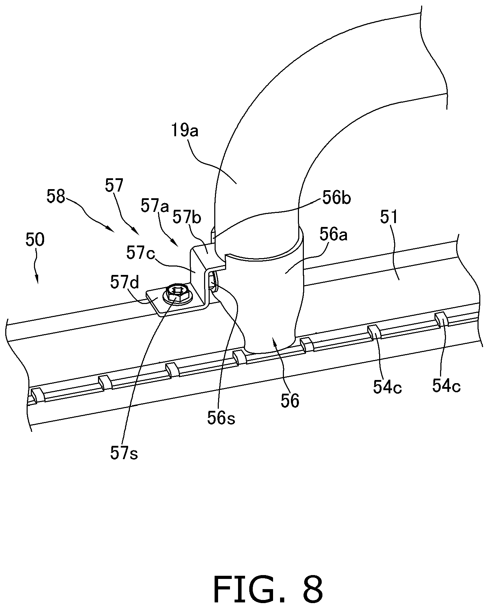

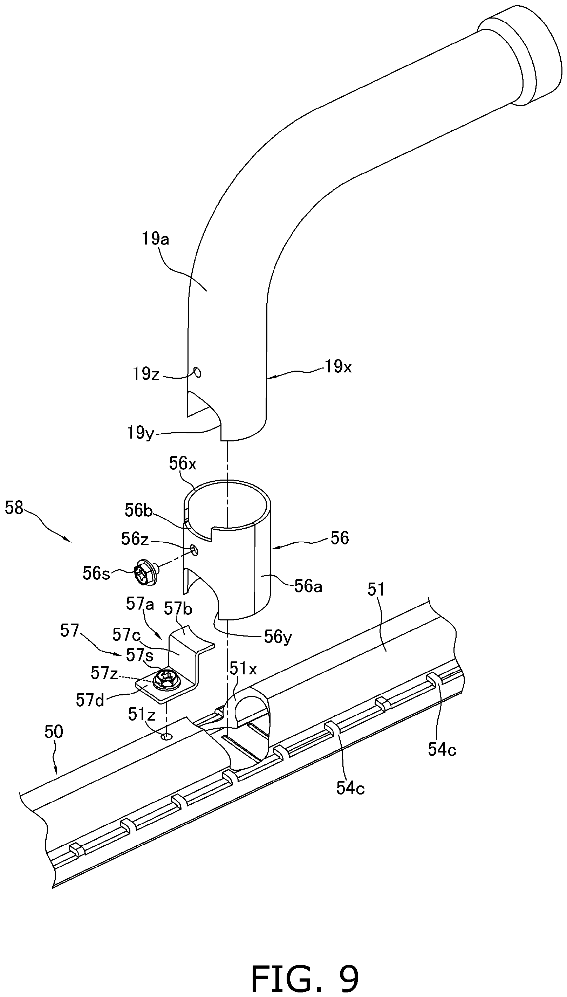

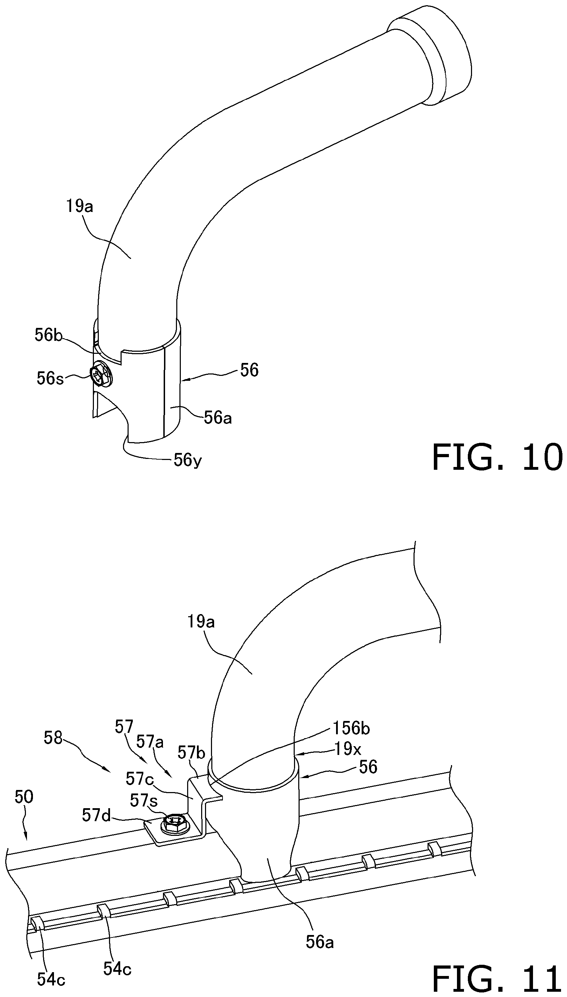

FIG. 8 is an external perspective view of a coupling part between the gas header 50 and the gas refrigerant connecting pipe 19a. FIG. 9 is an exploded perspective view of a vicinity of the coupling part between the gas header 50 and the gas refrigerant connecting pipe 19a. FIG. 10 is an external perspective view showing how a first coupling portion 56 is fixed to the gas refrigerant connecting pipe 19a.

The gas header 50 and the gas refrigerant connecting pipe 19a are coupled and fixed via the coupling portion 58.

The gas refrigerant connecting pipe 19a has a pipe coupling part 19x in which a cylindrical shape linearly extends along an axial direction near an end on a side connected to the gas header 50. The first gas refrigerant pipe 19 has a shape in which a cylindrical pipe is bent at a plurality of points. In the present embodiment, the gas refrigerant connecting pipe 19a also has a bent point. The gas refrigerant connecting pipe 19a and the first gas refrigerant pipe 19 including the gas refrigerant connecting pipe 19a have a predetermined thickness so as to ensure pressure resistance strength against the pressure of the gas refrigerant flowing inside. In the present embodiment, the gas refrigerant connecting pipe 19a and the first gas refrigerant pipe 19 including the gas refrigerant connecting pipe 19a do not have a clad layer including a brazing material, and include a metal such as an aluminum alloy having a predetermined composition.

A connecting side end of the pipe coupling part 19x of the gas refrigerant connecting pipe 19a has a pipe opening 19y having a shape in which a part of a cylindrical end is cut. Specifically, as viewed in the longitudinal direction of the gas header 50, the pipe opening 19y of the pipe coupling part 19x has a shape in which a part of the cylindrical end is cut along an edge of the internal space of the gas header 50 in the connecting opening 51x provided in the first header member 51 of the gas header 50.

The pipe coupling part 19x is provided with a pipe fixing hole 19z which is a screw hole penetrating in a thickness direction. A screw groove is provided on an inner periphery of the pipe fixing hole 19z.

The coupling portion 58 includes a first coupling portion 56 and a second coupling portion 57.

The first coupling portion 56 includes a tubular member 56a and a first screw 56s.

The tubular member 56a includes a cylindrical body, an insertion side opening 56x, a coupling side opening 56y, a first coupling hole 56z, and a notch 56b. The thickness of the tubular member 56a is smaller than the thickness of the gas refrigerant connecting pipe 19a and the first gas refrigerant pipe 19 including the gas refrigerant connecting pipe 19a. The tubular member 56a includes a metal layer such as an aluminum alloy and a clad layer including a brazing material. For example, the clad layer may be provided on an inner periphery of the tubular member 56a, or may be provided at a position of the coupling portion 58 corresponding to a contact part between the gas header 50 and the first coupling portion 56.

The tubular member 56a is screwed to the pipe coupling part 19x with the first screw 56s in a state where the pipe coupling part 19x is inserted into the tubular member 56a, and then, a relative position between the first coupling portion 56 and the pipe coupling part 19x is determined. Specifically, in the tubular member 56a, in a state where the pipe coupling part 19x is inserted inside and the first coupling hole 56z provided in the tubular member 56a and the pipe fixing hole 19z provided in the pipe coupling part 19x communicate with each other, the first coupling portion 56 is fixed to the pipe coupling part 19x by inserting the first screw 56s into the first coupling hole 56z and the pipe fixing hole 19z. In a state where the first coupling portion 56 is fixed to the pipe coupling part 19x as described above, the tubular member 56a on which the clad layer including a brazing material is formed covers the pipe coupling part 19x from around the pipe coupling part 19x as viewed in the axial direction. Therefore, the brazing material melted during in-furnace brazing is easily sufficiently supplied to a joint portion between the pipe coupling part 19x and the gas header 50.

The coupling side opening 56y of the tubular member 56a has a shape along the semi-arc shape of the first header member 51. Specifically, as viewed in the longitudinal direction of the gas header 50, the coupling side opening 56y of the tubular member 56a has a shape in which a part of the cylindrical end is cut along the edge of the internal space of the gas header 50 in the connecting opening 51x provided in the first header member 51 of the gas header 50. As a result, as viewed in the longitudinal direction of the gas header 50, an inner peripheral surface of the first header member 51 of the gas header 50, the coupling side opening 56y of the tubular member 56a, and the pipe coupling part 19x are disposed so as to overlap each other.

The insertion side opening 56x of the tubular member 56a is an opening opened in the axial direction of the tubular member 56a so that the pipe coupling part 19x is inserted.

The notch 56b of the tubular member 56a is a cut-away part partially provided only in a part of a periphery of the insertion side opening 56x when viewed from the axial direction of the pipe coupling part 19x in which the pipe coupling part 19x extends in a state of being attached to the pipe coupling part 19x. Specifically, the notch 56b is not provided over the entire periphery of the tubular member 56a, and the tubular member 56a has a portion not cut out around the notch 56b. The notch 56b has a shape released toward the insertion side opening 56x of the tubular member 56a. Specifically, the notch 56b has a shape in which a part of the edge of the insertion side opening 56x of the tubular member 56a is recessed in the axial direction of the tubular member 56a.

The gas refrigerant connecting pipe 19a is connected to the connecting opening 51x provided in the first header member 51 of the gas header 50 in a state where the first coupling portion 56 is fixed as shown in FIG. 1. The connecting opening 51x of the first header member 51 has a shape obtained by cutting with a cylindrical cutting tool in a direction orthogonal to the longitudinal direction of the gas header 50, from a vertex of the semicircular portion 51b toward the center of the semicircular portion 51b as viewed in the longitudinal direction of the gas header 50. Specifically, as viewed in the axial direction of the pipe coupling part 19x, an outer edge of the connecting opening 51x of the first header member 51 and an outer edge of the tubular member 56a are both circular. Therefore, only by connecting the gas refrigerant connecting pipe 19a to which the first coupling portion 56 is fixed to the connecting opening 51x of the first header member 51, the first coupling portion 56 and the gas refrigerant connecting pipe 19a are rotatable with the axial direction of the pipe coupling part 19x as an axis direction. Therefore, the second coupling portion 57 described below regulates the first coupling portion 56 and the gas refrigerant connecting pipe 19a not to rotate. When only the gas refrigerant connecting pipe 19a to which the first coupling portion 56 is fixed is connected to the connecting opening 51x of the first header member 51, the first coupling portion 56 and the gas refrigerant connecting pipe 19a fall off in a direction away from the first header member 51 along the axial direction of the pipe coupling part 19x in which the pipe coupling part 19x extends. Therefore, the second coupling portion 57 described below regulates the movement of the first coupling portion 56 and the gas refrigerant connecting pipe 19a so as not to fall off.

The second coupling portion 57 includes a coupling piece 57a and a second screw 57s. The coupling piece 57a is fixed to the first header member 51 of the gas header 50 with the second screw 57s.

The coupling piece 57a includes an insertion portion 57b, a connection portion 57c, and header fixing portion 57d. The thickness of the coupling piece 57a is smaller than the thickness of the gas refrigerant connecting pipe 19a and the first gas refrigerant pipe 19 including the gas refrigerant connecting pipe 19a. The coupling piece 57a includes a metal layer such as an aluminum alloy and a clad layer including a brazing material. The clad layer is provided, for example, on a side of the coupling piece 57a facing the first header member 51. In the present embodiment, the coupling piece 57a has a shape obtained by bending a plate-shaped member at two points.

The header fixing portion 57d is provided with a second coupling hole 57z penetrating in a plate thickness direction of the header fixing portion 57d. Here, the first header member 51 of the gas header 50 described above is provided with a header fixing hole 51z formed so as to penetrate in a thickness direction of the first header member 51 at the vertex of the semicircular portion 51b near the connecting opening 51x. As a result, with the second coupling hole 57z of the header fixing portion 57d and the header fixing hole 51z of the first header member 51 communicating with each other, the second screw 57s is inserted into the second coupling hole 57z and the header fixing hole 51z. Thus, the second coupling portion 57 is fixed to the first header member 51 of the gas header 50.

The connection portion 57c extends from an end of the tubular member 56a of the header fixing portion 57d in a direction away from the first header member 51 of the gas header 50, and communicates the header fixing portion 57d and the insertion portion 57b. In the present embodiment, a head of the first screw 56s is located between the connection portion 57c and the tubular member 56a.

The insertion portion 57b extends in a radial direction of the pipe coupling part 19x from a portion of the connection portion 57c farthest from the first header member 51 toward an axial center of the pipe coupling part 19x. As viewed in the axial direction of the pipe coupling part 19x, an end of the insertion portion 57b of the insertion portion 57b opposite to the connection portion 57c extends to a position overlapping the notch 56b of the tubular member 56a. Therefore, the insertion portion 57b is in contact with an edge of the end of the insertion portion 57b opposite to the connection portion 57c so as to be associated with the edge of the notch 56b. Specifically, a surface of the gas header 50 facing the first header member 51 near the end of the insertion portion 57b opposite to the connection portion 57c is in contact with a portion of the edge of the notch 56b of the tubular member 56a extending along a peripheral direction of the tubular member 56a so as to be associated with each other. The coupling piece 57a having the insertion portion 57b is screwed and fixed to the first header member 51 of the gas header 50 with the second screw 57s at the header fixing portion 57d. Accordingly, the surface of the insertion portion 57b facing the gas header 50 near a distal end in an insertion direction presses a part of the edge of the notch 56b of the tubular member 56a toward the gas header 50. As a result, the movement of the tubular member 56a in the direction away from the first header member 51 along the axial direction of the pipe coupling part 19x is regulated, and the movement of the pipe coupling part 19x integrated with the tubular member 56a in the direction away from the first header member 51 is also regulated. A distal end of the insertion portion 57b in the insertion direction into the notch 56b, of the end opposite to the connection portion 57c, has an arc shape. This arc-shaped portion of the insertion portion 57b is in contact along a peripheral surface of the pipe coupling part 19x. The end of the insertion portion 57b opposite to the connection portion 57c is in contact with both peripheral edges of the tubular member 56a of the notch 56b of the tubular member 56a. Specifically, a front edge near the end of the insertion portion 57b opposite to the connection portion 57c is in contact with a front edge of the notch 56b of the tubular member 56a, and a rear edge of the end of the insertion portion 57b opposite to the connection portion 57c is in contact with a rear edge of the notch 56b of the tubular member 56a. The coupling piece 57a having the insertion portion 57b is screwed and fixed to the first header member 51 of the gas header 50 with the second screw 57s at the header fixing portion 57d. As a result, the rotation of the tubular member 56a with the axial direction of the pipe coupling part 19x as the axis is regulated, and the rotation of the pipe coupling part 19x with the axial direction of the pipe coupling part 19x integrated with the tubular member 56a as the axis is also regulated.

### (6) Brazing of gas header and gas refrigerant connecting pipe in furnace

The gas header 50, the gas refrigerant connecting pipe 19a, and the coupling portion 58 are put into a furnace in a state where a positional relationship between the gas header 50 and the gas refrigerant connecting pipe 19a is temporarily fixed via the coupling portion 58, and thus, the brazing material included in the coupling portion 58 is melted and joined by brazing.

During brazing in the furnace, first, as shown in FIG. 10, the first coupling portion 56 of the coupling portion 58 is fixed to the gas refrigerant connecting pipe 19a. Specifically, the pipe coupling part 19x is inserted into the tubular member 56a, and the pipe coupling part 19x and the tubular member 56a are screwed by the first screw 56s.

Next, an integrated product of the pipe coupling part 19x and the tubular member 56a is inserted into the connecting opening 51x of the first header member 51 of the gas header 50. In this state, the movement of the integrated product of the pipe coupling part 19x and the tubular member 56a in the direction away from the first header member 51 along the axial direction of the pipe coupling part 19x is permitted, and the rotation of the integrated product of the pipe coupling part 19x and the tubular member 56a with the axial direction of the pipe coupling part 19x as the axis is also permitted.

In this situation, the movement and rotation of the integrated product of the pipe coupling part 19x and the tubular member 56a are regulated by using the second coupling portion 57 of the coupling portion 58. Specifically, in a state where the insertion portion 57b of the coupling piece 57a of the second coupling portion 57 is inserted into the notch 56b of the tubular member 56a, the header fixing portion 57d is screwed and fixed to the first header member 51 of the gas header 50 with the second screw 57s. As a result, the coupling piece 57a fixed to the first header member 51 of the gas header 50 regulates the movement of the tubular member 56a in the axial direction and the rotation of the tubular member 56a.

In a state where the positional relationship between the gas header 50 and the gas refrigerant connecting pipe 19a are determined and temporarily fixed as described above, the gas header 50, the gas refrigerant connecting pipe 19a, and the coupling portion 58 are put into a furnace to be joined by brazing.

### (7) Characteristics of embodiment

In the outdoor heat exchanger 11 according to the present embodiment, when the gas header 50 and the gas refrigerant connecting pipe 19a are joined, by being put into the furnace in a state where the position and direction of the gas refrigerant connecting pipe 19a with respect to the gas header 50 are regulated by the coupling portion 58, the gas header 50 and the gas refrigerant connecting pipe 19a are brazed in the furnace. Accordingly, the gas refrigerant connecting pipe 19a can be appropriately joined to the gas header 50.

The in-furnace brazing is performed in a state where the insertion portion 57b of the second coupling portion 57 fixed to the gas header 50 is in contact with the notch 56b of the tubular member 56a of the first coupling portion 56 fixed to the gas refrigerant connecting pipe 19a so as to press the notch 56b from the opposite side to the gas header 50. This prevents the gas refrigerant connecting pipe 19a from falling off the gas header 50 during brazing in the furnace.

Furthermore, the in-furnace brazing is performed in a state where the insertion portion 57b of the second coupling portion 57 fixed to the gas header 50 is in contact with both peripheral edges of the notch 56b of the tubular member 56a of the first coupling portion 56 fixed to the gas refrigerant connecting pipe 19a. As a result, the gas refrigerant connecting pipe 19a is prevented from rotating with respect to the gas header 50 with the axis of the gas refrigerant connecting pipe 19a as an axis.

Since the in-furnace brazing is performed in a state where the tubular member 56a covers the pipe coupling part 19x from the periphery, the brazing material melted during the in-furnace brazing is easily sufficiently supplied to the joint portion between the pipe coupling part 19x and the gas header 50.

In the gas header 50, the first header member 51 has the semicircular portion 51b. Therefore, even when a high-pressure gas refrigerant is supplied, pressure resistance strength is easily secured. In addition, the thickness of the first header member 51 is, for example, larger than the thickness of the tubular member 56a, and the pressure resistance strength is easily secured. As described above, the first header member 51 having a predetermined thickness can be obtained by extrusion molding instead of bending a plate-shaped member. When the first header member 51 is formed by extrusion molding, the first header member 51 preferably has no clad layer including a brazing material from the viewpoint of suppressing a dimensional error to be small. As described above, even when the first header member 51 of the gas header 50 does not include a brazing material, the in-furnace brazing is possible because the tubular member 56a has a clad layer including a brazing material in the present embodiment.

Similarly, even when the gas refrigerant connecting pipe 19a of the first gas refrigerant pipe 19 does not have a clad layer including the brazing material, the in-furnace brazing is possible because the tubular member 56a has a clad layer including a brazing material.

### (8) Other embodiments

### (8-1) Another embodiment A

In the above embodiment, a case as an example has been described where the position of the gas refrigerant connecting pipe 19a with respect to the gas header 50 is determined by inserting the insertion portion 57b of the coupling piece 57a into the notch 56b of the tubular member 56a.

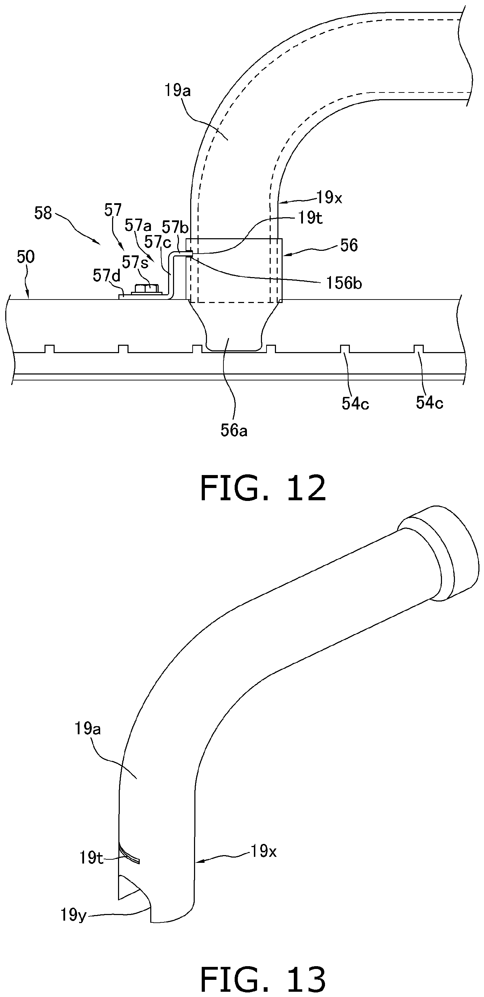

However, as shown in FIGS. 11, 12, and 13, the tubular member 56a may be provided with a slit 156b instead of the notch 56b according to the above embodiment, and a recess 19t into which the distal end of the insertion portion 57b of the coupling piece 57a is inserted may be provided on an outer peripheral surface of the pipe coupling part 19x. Specifically, as shown in FIG. 13, in the pipe coupling part 19x, the recess 19t is recessed radially inward from an outer peripheral portion of the pipe coupling part 19x. The recess 19t does not penetrate the pipe coupling part 19x in the radial direction, and the degree of the recess is within a range of the thickness. In this structure, the first screw 56s, the first coupling hole 56z, and the pipe fixing hole 19z in the above embodiment are unnecessary.

In this structure, the insertion portion 57b of the coupling piece 57a fixed to the gas header 50 is inserted into the slit 156b of the tubular member 56a, and is further fitted into the recess 19t provided in the outer peripheral surface of the pipe coupling part 19x.

As a result, the edges of the end of the insertion portion 57b of the coupling piece 57a opposite to the connection portion 57c, that is, the edges of both ends in the peripheral direction of the pipe coupling part 19x are in contact with the edges of both ends of the recess 19t in the peripheral direction of the pipe coupling part 19x, and thus, the rotation of the pipe coupling part 19x is regulated. The edges of the end of the insertion portion 57b of the coupling piece 57a opposite to the connection portion 57c, that is, the edges of both ends in the peripheral direction of the pipe coupling part 19x are in contact with the edges of both ends of the slit 156b of the tubular member 56a, and thus, the rotation of the tubular member 56a is also regulated.

Furthermore, each surface in the axial direction of the pipe coupling part 19x near the end of the insertion portion 57b of the coupling piece 57a opposite to the connection portion 57c is in contact with each surface in the axial direction of the pipe coupling part 19x of the recess 19t, and thus, the movement of the pipe coupling part 19x in the axial direction is regulated to prevent the pipe coupling part 19x from falling off. In addition, each surface in the axial direction of the pipe coupling part 19x near the end of the insertion portion 57b of the coupling piece 57a opposite to the connection portion 57c is in contact with each surface in the axial direction of the slit 156b of the tubular member 56a, and thus, the movement of the tubular member 56a in the axial direction is regulated to prevent falling off.

As described above, during the in-furnace brazing, the melted brazing material included in the tubular member 56a can be sufficiently supplied to the joint portion between the gas header 50 and the gas refrigerant connecting pipe 19a.

### (8-2) Another embodiment B

In the above embodiment, a case as an example has been described where the position of the gas refrigerant connecting pipe 19a with respect to the gas header 50 is determined by inserting the insertion portion 57b of the coupling piece 57a into the notch 56b of the tubular member 56a.

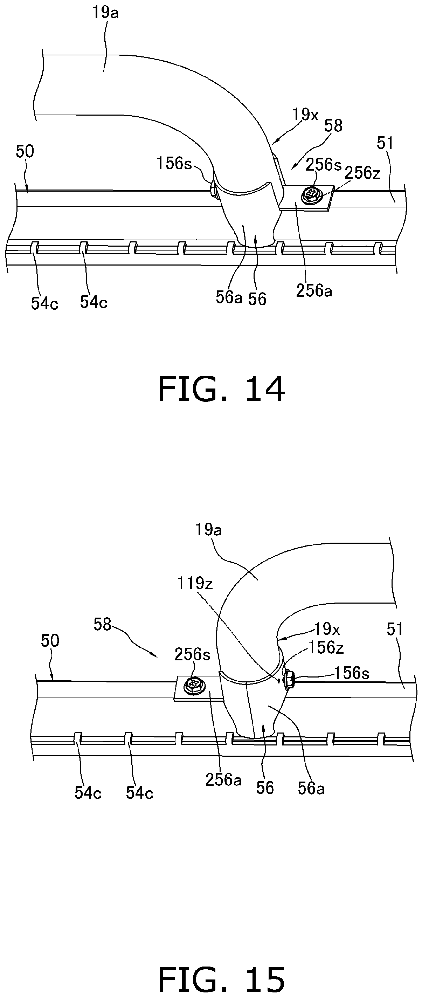

However, as shown in FIGS. 14 and 15, instead of the second coupling portion 57 according to the above embodiment, the tubular member 56a may be provided with a fixing plate 256a formed such that a part of a side surface of the tubular member 56a is cut down toward the first header member 51. The fixing plate 256a is a plate-shaped portion extending outward in a peripheral direction from the tubular member 56a and expanding in a planar shape with the axial direction of the tubular member 56a as a normal direction. The fixing plate 256a is integrated with the tubular member 56a. In this structure, the notch 56b provided in the tubular member 56a in the above embodiment is unnecessary.

In this structure, instead of the pipe fixing hole 19z, the first coupling hole 56z, and the first screw 56s in the above embodiment, a pipe fixing hole 119z (indicated by a dotted line in FIG. 15), a third coupling hole 156z (indicated by a dotted line in FIG. 15), and a third screw 156s are provided. Specifically, the tubular member 56a is provided with the third coupling hole 156z on an opposite side to a direction in which the fixing plate 256a extends when viewed in the axial direction of the pipe coupling part 19x. The third coupling hole 156z is a hole penetrating the tubular member 56a in the radial direction of the pipe coupling part 19x. The pipe coupling part 19x is provided with the pipe fixing hole 119z at a position corresponding to the third coupling hole 156z. In the pipe coupling part 19x, the pipe fixing hole 119z is recessed radially inward from the outer peripheral portion of the pipe coupling part 19x. The pipe fixing hole 119z does not penetrate the pipe coupling part 19x in the radial direction, and the degree of the recess is within a range of the thickness. The third coupling hole 156z and the pipe fixing hole 119z are screwed with the third screw 156s in a state where the pipe coupling part 19x overlaps in the radial direction. As a result, the tubular member 56a is fixed to the pipe coupling part 19x.

The fixing plate 256a is obtained, for example, by cutting a tubular member at two cutting lines extending in the axial direction of the tubular shape along the peripheral surface of the tubular member and pushing down the tubular radially outward. The fixing plate 256a is provided with a fourth coupling hole 256z (indicated by a dotted line in FIG. 14) penetrating in a plate thickness direction. The tubular member 56a and the first header member 51 of the gas header 50 are fixed by being screwed with the fourth screw 256s in a state where the fourth coupling hole 256z of the fixing plate 256a and the header fixing hole 51z of the first header member 51 of the gas header 50 overlap with each other.

As a result, the movement of the fixing plate 256a of the tubular member 56a in the direction away from the first header member 51 is regulated, and thus, the pipe coupling part 19x fixed to the tubular member 56a with the third screw 156s is regulated so as not to fall off. In addition, the rotation of the fixing plate 256a with the axial direction of the tubular member 56a as the axis is regulated, and thus, the rotation of the pipe coupling part 19x fixed to the tubular member 56a with the third screw 156s is regulated.

### (8-3) Another embodiment C

In the above embodiment, a case has been described as an example where the in-furnace brazing is performed in a state where the front and rear edges of the end of the insertion portion 57b of the second coupling portion 57 opposite to the connection portion 57c are in contact with both peripheral edges of the notch 56b of the tubular member 56a of the first coupling portion 56.

However, for example, a front-rear length of the end of the insertion portion 57b of the second coupling portion 57 opposite to the connection portion 57c may be shorter than a length between a front edge and a rear edge in the peripheral direction of the notch 56b of the tubular member 56a of the first coupling portion 56. Specifically, a gap may be formed between the front and rear edges of the insertion portion 57b and the front and rear peripheral edges of the notch 56b. By adjusting the size of the edge of the insertion portion 57b and the size of the notch 56b of the tubular member 56a so that the dimension of the gap is equal to or less than a predetermined value, it is possible to adjust a tolerance of the positional relationship of the gas refrigerant connecting pipe 19a with respect to the gas header 50 during the in-furnace brazing. For example, the ratio of the length of the edge of the insertion portion 57b in the front-rear direction to the length of the notch 56b of the tubular member 56a in the front-rear direction may be adjusted to, for example, 90% or more.

### (8-4) Another embodiment D

In the above embodiment, a case has been described as an example where the in-furnace brazing is performed in a state where a surface facing the gas header 50 near the end of the insertion portion 57b of the second coupling portion 57 opposite to the connection portion 57c is in contact with a portion extending along the peripheral direction of the edge of the notch 56b of the tubular member 56a of the first coupling portion 56.

However, for example, the surface facing the gas header 50 near the end of the insertion portion 57b of the second coupling portion 57 opposite to the connection portion 57c and the portion extending along the peripheral direction of the edge of the notch 56b of the tubular member 56a of the first coupling portion 56 is not required to be in contact with each other, and a gap expanding in the axial direction of the pipe coupling part 19x may be generated between the surface and the portion. By adjusting the position of the insertion portion 57b and the position of the notch 56b of the tubular member 56a so that the dimension of the gap is equal to or less than a predetermined value, it is possible to adjust a tolerance of the positional relationship of the gas refrigerant connecting pipe 19a with respect to the gas header 50 during the in-furnace brazing. The length of the gap in the axial direction of the pipe coupling part 19x may be, for example, equal to or less than the thickness of the first header member 51 of the gas header 50, and is preferably equal to or less than 50% of the thickness. However, the length is not limited to this example.

### (8-5) Another embodiment E

In the above embodiment, a case has been described as an example where the in-furnace brazing is performed in a state where the gas refrigerant connecting pipe 19a is prevented from coming off from the gas header 50 and the rotation of the gas refrigerant connecting pipe 19a with respect to the gas header 50 is also prevented.

However, the in-furnace brazing may be performed in a state where the gas refrigerant connecting pipe 19a is prevented from coming off from the gas header 50 but the rotation of the gas refrigerant connecting pipe 19a with respect to the gas header 50 is not prevented. Alternatively, the in-furnace brazing may be performed in a state where the gas refrigerant connecting pipe 19a is not prevented from coming off from the gas header 50 but the rotation of the gas refrigerant connecting pipe 19a with respect to the gas header 50 is prevented.

### (8-6) Another embodiment F

In the positioning of the gas refrigerant connecting pipe 19a in the above embodiment, a case as an example has been described where the tubular member 56a is fixed to the pipe coupling part 19x with the first screw 56s, and thus, the position of the gas refrigerant connecting pipe 19a with respect to the gas header 50 is determined by inserting the insertion portion 57b of the coupling piece 57a into the notch 56b of the tubular member 56a.

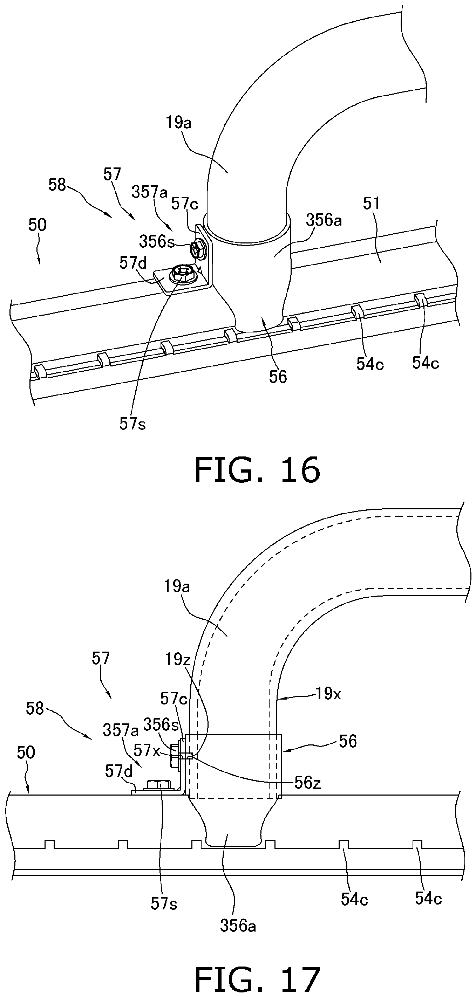

However, the position of the gas refrigerant connecting pipe 19a may be determined by the structure shown in FIGS. 16 and 17.

In this structure, the first coupling portion 56 includes a tubular member 356a which is not provided with the notch 56b of the tubular member 56a of the above embodiment, and includes a common screw 356s instead of the first screw 56s. **In** this structure, the second coupling portion 57 includes a coupling piece 357a not provided with the insertion portion 57b in the coupling piece 57a of the above embodiment but provided with a through hole 57x, and includes a second screw 57s.

In this structure, the header fixing portion 57d included in the second coupling portion 57 extends to abut against a peripheral surface of the tubular member 356a, and the connection portion 57c and the peripheral surface of the tubular member 356a are in contact with each other. The through hole 57x is provided so as to penetrate the connection portion 57c of the coupling piece 357a in a plate thickness direction.

In the above structure, similarly to the above embodiment, the second coupling portion 57 is fixed to the first header member 51 by the second coupling hole 57z and the header fixing hole 51z being screwed with the second screw 57s while communicating with each other. In this state, the pipe fixing hole 19z, the first coupling hole 56z, and the through hole 57x are screwed with the common screw 356s while communicating with each other, and thus, not only the tubular member 356a but also the second coupling portion 57 can be fixed to the pipe coupling part 19x. Since the second coupling portion 57 is fixed to the first header member 51, the pipe coupling part 19x can be fixed to the first header member 51. In this case, since the periphery of the shaft of the common screw 356s is surrounded by the peripheral surface of the through hole 57x of the connection portion 57c, the rotation of the pipe coupling part 19x and the tubular member 356a is regulated, and the movement of the pipe coupling part 19x and the tubular member 356a in the direction away from the first header member 51 is also regulated.

The through hole 57x provided in the connection portion 57c of the coupling piece 357a may be, for example, a hole larger than the diameter of the common screw 356s, or a screw groove that can be screwed with the screw thread of the common screw 356s may be provided on an inner periphery of the through hole 57x. When the diameter of the through hole 57x is larger than the diameter of the common screw 356s, the distal end of the common screw 356s is screwed into the pipe fixing hole 19z, and thus, the connection portion 57c is fixed by being sandwiched between the peripheral surface of the pipe coupling part 19x and the head of the common screw 356s. When a thread groove is provided on the inner periphery of the through hole 57x, the common screw 356s is screwed into both the through hole 57x and the pipe fixing hole 19z to be fixed.

### (8-7) Another embodiment G

In the another embodiment F described above, the position of the gas refrigerant connecting pipe 19a with respect to the gas header 50 is determined by fixing the connection portion 57c to the tubular member 356a with the common screw 356s.

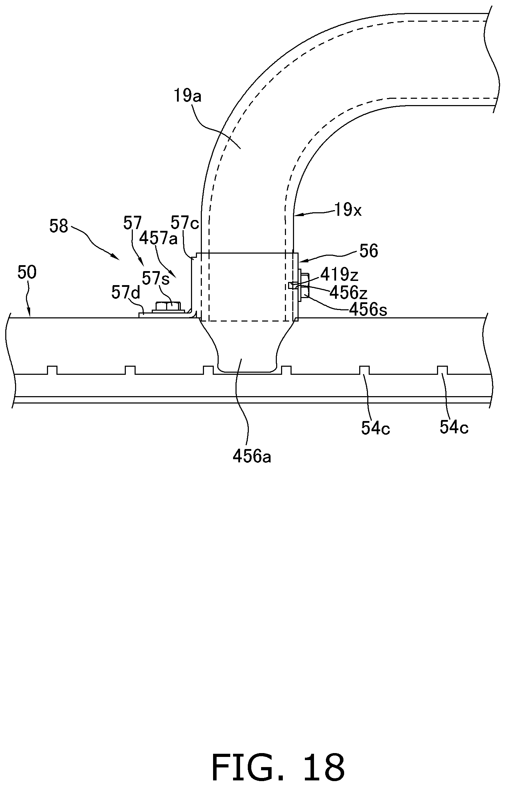

However, the position of the gas refrigerant connecting pipe 19a may be determined by the structure shown in FIG. 18.

In this structure, the connection portion 57c is fixed to the peripheral surface of the tubular member 456a by welding or the like to be integrated, and the tubular member 456a and the coupling piece 457a constitute one member.

Specifically, the coupling piece 457a is not provided with the through hole 57x in the coupling piece 357a of the another embodiment F. **In** the tubular member 456a, a first coupling hole 456z is provided instead of the first coupling hole 56z in the tubular member 56a of the above embodiment and the tubular member 356a of the another embodiment F. The pipe coupling part 19x in this structure is provided with a pipe fixing hole 419z instead of the pipe fixing hole 19z in the pipe coupling part 19x of the above embodiment and the another embodiment F. Here, the first coupling hole 456z and the pipe fixing hole 419z are provided so as to communicate with each other at positions not overlapping the connection portion 57c in a state where the position of the gas refrigerant connecting pipe 19a with respect to the gas header 50 is to be determined.

In the above structure, the second coupling portion 57 is fixed to the first header member 51 by the second coupling hole 57z and the header fixing hole 51z being screwed with the second screw 57s while communicating with each other. In this state, the pipe coupling part 19x is inserted into the tubular member 456a integrated with the connection portion 57c of the second coupling portion 57, and is screwed with the first screw 456s in a state where the first coupling hole 456z and the pipe fixing hole 419z communicate with each other. As a result, the tubular member 456a can be fixed to the pipe coupling part 19x, and the second coupling portion 57 integrated with the tubular member 456a can also be fixed. Since the second coupling portion 57 is fixed to the first header member 51, the pipe coupling part 19x can be fixed to the first header member 51. In this case, since the second coupling portion 57 integrated with the tubular member 456a is fixed to the first header member 51, the rotation of the pipe coupling part 19x and the tubular member 356a is regulated, and the movement of the pipe coupling part 19x and the tubular member 356a in the direction away from the first header member 51 is also regulated.

### (Supplementary note)

Although the embodiments of the present disclosure have been described above, it will be understood that various changes in form and details can be made without departing from the gist and scope of the present disclosure described in the claims.

### REFERENCE SIGNS LIST

1: Air conditioner
11: Outdoor heat exchanger (heat exchanger)
19: First gas refrigerant pipe
19a: Gas refrigerant connecting pipe (refrigerant pipe)
19x: Pipe coupling part
19y: Pipe opening
19z: Pipe fixing hole
20: Liquid refrigerant pipe
20a: Liquid refrigerant connecting pipe
27: Heat exchange portion
28: Flat tube (heat transfer tube)
30: Turnaround header
40: Inlet-outlet header
50: Gas header (header)
51: First header member
51a: First plate-shaped portion
51b: Semicircular portion
51x: Connecting opening
51z: Header fixing hole
54c: Claw
56: First coupling portion (coupling portion)
56a: Tubular member
56b: Notch (first shape portion)
56s: First screw
56x: Insertion side opening
56y: Coupling-side opening
56z: First coupling hole
57: Second coupling portion (coupling portion)
57a: Coupling piece
57b: Insertion portion (second shape portion)
57c: Connection portion
57d: Header fixing portion
57s: Second screw
57z: Second coupling hole
58: Coupling portion
60: Liquid header
119z: Pipe fixing hole
156b: Slit (first shape portion, opening)
156s: Third screw
156z: Third coupling hole
256a: Fixing plate
256s: Fourth screw
256z: Fourth coupling hole

### CITATION LIST

### PATENT LITERATURE

Patent Literature 1: JP 2023-102026 A

## Claims

1. A heat exchanger (11) comprising:
a plurality of heat transfer tubes (28);
a header (50) to which the plurality of heat transfer tubes is connected;
a refrigerant pipe (19a) connected to the header; and
a coupling portion (58) that is provided at a coupling part between the header and the refrigerant pipe and is separate from the header and the refrigerant pipe, wherein
the coupling portion includes a metal and a brazing material.

2. The heat exchanger according to claim 1, wherein the coupling portion regulates a movement of a pipe coupling part (19x) that is the coupling part of the refrigerant pipe, the movement being directed in a direction in which the pipe coupling part extends.

3. The heat exchanger according to claim 1 or 2, wherein
the refrigerant pipe is a circular pipe, and
the coupling portion regulates a rotation of the pipe coupling part (19x) that is the coupling part of the refrigerant pipe in a case where the direction in which the pipe coupling part extends is an axis direction of the rotation.

4. The heat exchanger according to any one of claims 1 to 3, wherein
the coupling portion includes a first coupling portion (56) fixed to the pipe coupling part (19x) that is the coupling part of the refrigerant pipe and a second coupling portion (57) fixed to the header, and
the second coupling portion regulates a movement of the first coupling portion.

5. The heat exchanger according to claim 4, wherein the first coupling portion covers a periphery of the pipe coupling part when viewed from the direction in which the pipe coupling part extends.

6. The heat exchanger according to claim 4 or 5, wherein
the first coupling portion has a first shape portion (56b, 156b) partially provided in a peripheral direction of the pipe coupling part,
the refrigerant pipe is a circular pipe, and
the second coupling portion has a second shape portion (57b) that regulates a rotation of the pipe coupling part in association with the first shape portion in a case where the direction in which the pipe coupling part extends is the axis direction of the rotation.

7. The heat exchanger according to claim 6, wherein
the first coupling portion includes a tubular member (56a) that covers the pipe coupling part from the periphery,
the first shape portion is an opening (156b) or a notch (56b) provided in the tubular member, and
the second shape portion is inserted into the opening or the notch in a radial direction of the pipe coupling part.

8. The heat exchanger according to claim 4 or 5, wherein the second coupling portion is fixed to the first coupling portion, fixed to the pipe coupling part via the first coupling portion, or integrated with the first coupling portion.

9. The heat exchanger according to claim 1 or 2, wherein
the header includes a first header member (51) including the coupling part of the header, and
the first header member includes a semicircular portion (51b) having a semicircular shape when viewed in a longitudinal direction of the first header member.

10. The heat exchanger according to any one of claims 1 to 9, wherein the refrigerant pipe and the header do not include a brazing material.

11. An air conditioner (1) comprising the heat exchanger according to any one of claims 1 to 10.

12. A method of manufacturing a heat exchanger (11) including a plurality of heat transfer tubes (28), a header (50) to which the plurality of heat transfer tubes is connected, and a refrigerant pipe (19a) connected to the header, the method comprising:
a positioning step of providing a coupling portion (58) including a metal and a brazing material at a coupling part between the header and the refrigerant pipe, and determining a position of the refrigerant pipe with respect to the header via the coupling portion; and
a brazing step of brazing the refrigerant pipe to the header in a state of being positioned in the positioning step.

13. The method of manufacturing the heat exchanger according to claim 12, wherein
the refrigerant pipe is a circular pipe, and
in the positioning step, a regulation state is set in which a rotation of a pipe coupling part (19x) that is the coupling part with the header in the refrigerant pipe is regulated in a case where a direction in which the pipe coupling part extends is an axis direction of the rotation by using the coupling portion, and
in the brazing step, the refrigerant pipe is brazed to the header in the regulation state.

14. The method of manufacturing the heat exchanger according to claim 12 or 13, wherein the brazing step is performed in a furnace.
